# EUROPEAN PATENT APPLICATION

(11) **EP 4 756 319 A1**
(43) Date of publication of application: **10.06.2026**
(21) Application number: 24217731.9
(22) Date of filing: 05.12.2024
(51) Int. Cl.: F25B 15/00, F25B 15/06, B60H 1/00

(54) **THERMAL ENERGY ARRANGEMENT**

(71) Applicant: Aquafair AB, 193 33 Sigtuna (SE)
(72) Inventor: CARLMAN, Fredrik, Sigtuna (SE); ÅHRSTRÖM, Bert-Olof, Örnsköldsvik (SE)
(74) Representative: Bjerkén Hynell KB

(57) **Abstract**

A thermal energy arrangement (2) comprising a mechanical vapor recompression, MVR, unit (4), an absorption cooler unit (6), and a control system (8) configured to control said MVR unit (4) and said absorption cooler unit (6).

The evaporation compartment (18) of the MVR-unit (4) is arranged to receive a working liquid, comprising a mixture of at least an absorbent, and a refrigerant, from the absorption cooler unit (6) via a working liquid line (22). The evaporation compartment (18) is connected to a controllable vacuum unit (28) via a vacuum line (30), wherein said control system (8) is configured to control said vacuum unit (28) to generate a variable pressure, being below ambient pressure, in order to lower the evaporation temperature of the working liquid within the evaporation compartment (18), wherein the set of pressure control rules is related to characteristics of the working liquid.

The working liquid condensate from the MVR-unit (4) is arranged to be supplied to the absorption cooler unit (6) via a working liquid condensate line (32), wherein, as the refrigerant evaporates in the evaporation compartment (18), a working liquid salt brine solution in said at least one evaporation compartment (18) is arranged to be supplied via a salt brine solution line (34) to said absorption cooler unit (6).

A heat exchanger (36) is arranged at said working liquid condensate line (32) and said salt brine solution line (34) configured to transfer heat from the working liquid condensate and the salt brine solution to the working liquid in the working liquid line (22) to be supplied to said MVR-unit (4).

## Description

### Technical field

The present disclosure relates to a thermal energy arrangement comprising a mechanical vapor recompression (MVR) unit and an absorption cooler unit.

### Background

In the field of thermal energy management and generation there is generally a demand of using a more energy-efficient technology. One such technology is Mechanical Vapor Recompression (MVR), which is an evaporation method by which a blower, compressor or jet ejector is used to compress, and as a result of the compression, increase the pressure, density and temperature of the vapor produced.

As a result, the vapor can serve as the heating medium for its "mother" liquid or solution being concentrated. Without the compression, the vapor would be at the same temperature as its "mother" liquid/solution, and no heat transfer could take place.

Below some patent documents within the technical field will be briefly discussed.

In the US10793483 a system is described using a mechanical vapor recompression evaporator (MVR) to receive a liquid fraction from a centrifuge and evaporating the liquid fraction by mechanical vapor recompression to produce ammonia-laden water vapor and a concentrated nutrient slurry. The system comprises a dryer for drying the nutrient slurry to a selected moisture content to be available as an ingredient in compounded fertilizer; and an ammonia stripping tower assembly to receive ammonia-laden water vapor from the MVR and from it to precipitate ammonium sulphate salt and condense water as separate products.

In EP2716341, a system and a method are described for liquid treatment by mechanical vapor recompression comprising a fixed fluid-tight evaporator housing. The housing comprises an inlet for feeding liquid to be evaporated into the housing and an outlet from the housing for liquid concentrated by evaporation and an outlet from the housing for discharging vapor boiled off from the liquid by evaporation. The housing comprises a plurality of heating elements within the housing mounted on a common horizontal axis, each of said heating elements having an outer surface for contact with said liquid to be evaporated within the housing and having an internal passage for heating medium and an element inlet and an element outlet for the heating medium.

In WO2022/002708 is disclosed a mechanical vapor recompression (MVR) liquid purification system is disclosed, in particular an MVR water desalination system, comprising a pressure-tight enclosure provided with a first end and a second end, having an essentially circular cylindrical elongated shape along a longitudinal axis A, and numerous evaporation compartments, arranged within the enclosure along the longitudinal axis A. The system further comprises a central tube running along the longitudinal axis A of the enclosure through the centers of said evaporation compartments, and configured to allow steam to flow from the second end to the first end of the enclosure. WO2023/217493 relates to an electrical vehicle comprising a battery system provided with a thermal energy arrangement arranged to supply thermal energy to keep the battery system within an optimal operating temperature interval. The arrangement comprises a mechanical vapor recompression (MVR) unit and an absorption cooler to keep the temperature of the battery system within a predetermine temperature interval.

The object of the present invention is to achieve an improved thermal energy arrangement configured to provide a more energy efficient arrangement than presently is available for heating and cooling purposes.

### Summary

The above-mentioned object is achieved by the present invention according to the independent claims.

Preferred embodiments are set forth in the dependent claims.

The basic idea behind the present invention is to combine a mechanical vapour recompression (MVR) unit with an absorption cooler unit into a thermal energy arrangement, and using a working liquid, preferably a water-lithium bromide solution including an anti-freezing agent and water, capable of being fluid also at low temperatures. The MVR unit provides a high-efficient producer of hot water to be supplied to the absorption cooler unit that in return supplies the working liquid to the MVR unit.

According to the present invention, an active pressure control is introduced in parallel to common means for controlling temperature in a MVR-unit e.g. valve-, electric energy-, level-, pump- and turbine rotational speed control. This feature is particularly applicable in closed-loop systems (heating and/or cooling) where no mass-flux interferes with the set system pressure. In one embodiment, a vacuum unit is controlled to lower the pressure inside the evaporation compartment of the MVR unit, to a desired pressure beneath ambient, thereafter it is shut off.

The working liquid will, due to the lower vapour pressure, start to boil and evaporate at a temperature significantly below 100 °C. The MVC/MVR cycle will work as intended, but under lower system pressure, thereby lower temperature.

Obvious advantages of active pressure control in the case of MVR closed loop heating via condensate are lower system temperature, safer temperatures, less propensity for leakage, lower demand on insulation due to lower irradiation-, convection- and conduction losses.

The lower system temperature of the MVR-unit in the thermal energy arrangement according to the present invention will significantly lower the need for external process heat removal and thereby increase system efficiency significantly.

### Brief description of the drawings

Figure 1 is a block diagram schematically illustrating the thermal energy arrangement according to embodiments of the present invention.
Figure 2 is a schematic illustration of the thermal energy arrangement including an MVR-unit, and an absorption cooler unit, according to embodiments of the present invention.
Figure 3 is a schematic illustration of the thermal energy arrangement including an MVR-unit, and an absorption cooler unit, according to other embodiments of the present invention.

### Detailed description

The thermal energy arrangement will now be described in detail with references to the appended figures. Throughout the figures the same, or similar, items have the same reference signs. Moreover, the items and the figures are not necessarily to scale, emphasis instead being placed upon illustrating the principles of the invention.

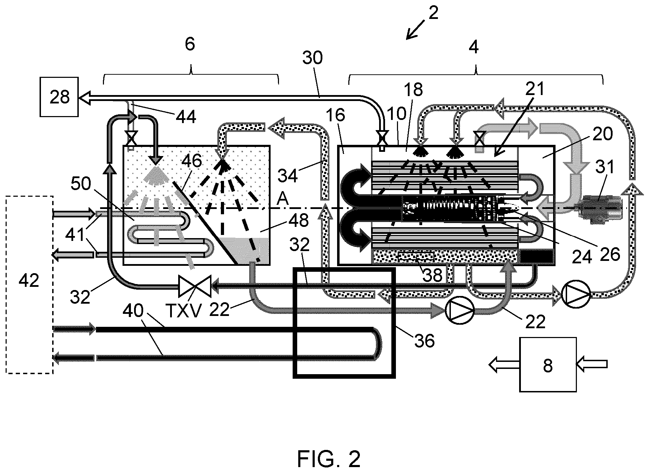

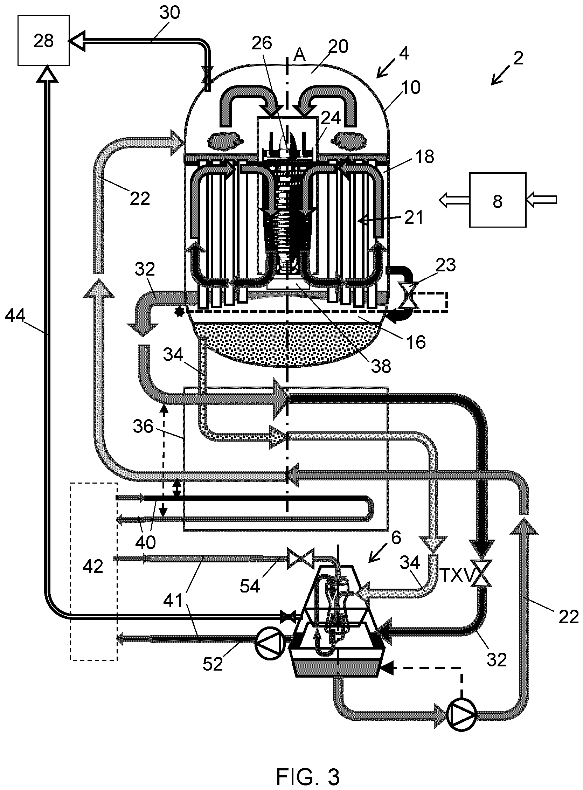

In figures 2 and 3, that illustrates embodiments of the arrangement, pipes, tubes and other conduits of liquid and/or vapour are generally shown as block arrows. Some of these pipes and tubes are provided with pumping members that are schematically illustrated; these pumps are optional, as fewer or more may be included.

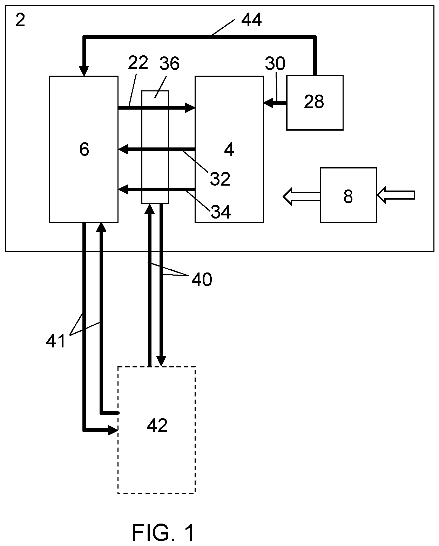

First with reference to figure 1, a thermal energy arrangement 2 is shown, comprising a mechanical vapor recompression, MVR, unit 4, an absorption cooler unit 6, and a control system 8 configured to control the MVR unit 4 and the absorption cooler unit 6.

In the figures, block arrows in relation to the control system 8 indicate input signals, such as temperature measurement signals, pressure measurement signals, required temperatures of external thermal energy users, operator input, and output signals, such as control signals to control the various parts of the arrangement, compressor and pump speeds, power consumption, process liquid levels, motor-controlled valves etc.

With further references to figures 2 and 3, the MVR-unit 4 comprises a pressure-tight enclosure 10 provided with a first end and a second end, and having an elongated shape along a longitudinal axis A. In one variation the enclosure having a shape that is essentially circular cylindrical. The enclosure 10 comprises a first end chamber 16, at least one evaporation compartment 18, and a second end chamber 20, arranged within the enclosure 10 along the longitudinal axis A.

The at least one evaporation compartment 18 of the MVR-unit 4 is arranged to receive a working liquid, comprising a mixture of at least an absorbent, and a refrigerant, from the absorption cooler unit 6 via a working liquid line 22.

The MVR-unit 4 further comprises a compressor tube 24 running along the longitudinal axis A of the enclosure 10, e.g. through the center of the at least one evaporation compartment 18. A compressor assembly 26 is arranged, that preferably comprises a turbine provided with turbine vane members, structured to provide a working liquid vapour flow within the tube 24 from the second end to the first end of the enclosure 10.

The at least one evaporation compartment 18 is connected to a controllable vacuum unit 28 via a vacuum line 30. The control system 8 is configured to control the vacuum unit 28 to generate a variable pressure, being below ambient pressure, in dependence of a set of pressure control rules, in order to lower the evaporation temperature of the working liquid within the at least one evaporation compartment 18. The set of pressure control rules is related to characteristics of the working liquid.

By fine-tuning the pressure inside the evaporation compartment 18, the system ensures optimal evaporation conditions for the refrigerant component of the working liquid, enhancing the overall thermal efficiency of the arrangement.

The working liquid condensate from the MVR-unit 4 is arranged to be supplied to the absorption cooler unit 6 via a working liquid condensate line 32. As the refrigerant evaporates in the evaporation compartment 18, a working liquid salt brine solution in the at least one evaporation compartment 18 is arranged to be supplied via a salt brine solution line 34 to the absorption cooler unit 6. Thus, the evaporative processes within the MVR unit 4 lead to the separation of the refrigerant and the absorbent in the working liquid.

The thermal energy arrangement 2 further comprises a heat exchanger 36 arranged at the working liquid condensate line 32 and the salt brine solution line 34 configured to transfer heat from the working liquid condensate and the salt brine solution to the working liquid in the working liquid line 22 to be supplied to, and received by, the at least one evaporation compartment 18 of said MVR-unit 4.

Particularly, to enhance energy efficiency, the thermal energy arrangement incorporates the heat exchanger 36, placed to interact with both the working liquid condensate line 32 and the salt brine solution line 34. The heat exchanger is configured to transfer residual heat from the working liquid condensate and salt brine solution to the incoming working liquid in the working liquid line 22. This recuperative heat transfer process preheats the working liquid before it enters the evaporation compartment 18, reducing the energy demand for subsequent vaporization and further improving the system's performance.

The control system 8 is a central part of the thermal energy arrangement according to the invention, orchestrating the operation of the MVR unit 4, absorption cooler unit 6, and vacuum unit 28. By dynamically adjusting parameters such as the vacuum pressure and flow rates based on the pressure control rules, the control system ensures the following optimal evaporation conditions in the evaporation compartment 18; balanced flow of refrigerant and absorbent between the MVR unit and absorption cooler unit, and energy-efficient operation of the heat exchanger 36.

The described thermal energy arrangement 2 provides a highly integrated solution for managing thermal energy flows. Key advantages include:
- Enhanced energy efficiency through the use of mechanical vapor recompression and heat recovery.
- Precise control over evaporation conditions via the vacuum system.
- Improved system integration, reducing thermal losses and ensuring effective refrigerant and absorbent cycling between components.

The combination of these features makes the invention particularly suitable for applications demanding high energy efficiency, such as industrial cooling and climate control systems, and various heating and cooling applications, e.g. electrical vehicles.

According to an embodiment, the characteristics of the working liquid comprises the evaporation temperature of the working liquid. Thus, the control system 8 utilizes this characteristic to dynamically regulate the pressure within the evaporation compartment 18 via the vacuum unit 28. By correlating the evaporation temperature with pressure, the control system ensures precise control over the phase change process, optimizing energy consumption and system efficiency.

In a further embodiment, the working liquid comprises a mixture of an absorbent being Lithium Bromide, a refrigerant being water, a corrosion inhibitor being e.g. Lithium Chromate, and an antifreeze agent being e.g. Ethylene Glycol.

This specific formulation balances thermal performance, stability, and corrosion resistance, ensuring reliable operation under varying environmental conditions. Furthermore, there may be additional additives, e.g. performance enhancers and biocides, which are chosen in dependence of the application of the arrangement.

According to another embodiment, a heating member 38 is provided, configured to heat the working liquid within the evaporator compartment 18 to its evaporation point. The heating member 38 may e.g. be a resistive heating coil arranged within the evaporator compartment 18.

Once the evaporation temperature is reached, the control system 8 activates the compressor assembly 26, causing the evaporated working liquid vapor to be compressed. This compression increases the vapor temperature by 5-40°C above the evaporation temperature, providing the necessary thermal gradient for efficient heat exchange.

According to still another embodiment, the heat exchanger 36 comprises a heating line 40 with a heating liquid arranged to be heated and then applied to an external thermal energy user 42 for heating purposes. This feature enables the thermal energy arrangement to integrate seamlessly into systems requiring external heating, enhancing its utility and versatility.

In one variation, the working liquid condensate line 32 may be directly connected to the part of the heating line 40 leading heating liquid out from the heat exchanger 36 via valves (this line is schematically illustrated by a dashed double-arrow in the figure), thus by-passing the heat exchanger. In addition, a further separate line (illustrated by a dashed double-arrow in the figure) may be directly connected to the part of the heating line 40 leading cooled heating liquid back into the heat exchanger 36 to working liquid line 22 via valves, i.e. also by-passing the heat exchanger.

According to an embodiment, the absorption cooler unit 6 is connected to the vacuum unit 28 via an absorption cooler vacuum line 44, and that the control system 8 is configured to control the vacuum unit 28 to generate a variable under-pressure in dependence of a set of absorption cooler unit control rules. The under-pressure applied in the absorption cooler unit 6, may be the same, or may differ from the pressure within the evaporator compartment.

This active pressure control ensures a balanced interplay between the MVR unit 4 and the absorption cooler unit, promoting stable and efficient operation.

Before describing the two variations of the arrangement 2, a further description of the MVR unit will be provided with references to figures 2 and 3.

Specifically, the at least one evaporation compartment 18 comprises two essentially planar sidewalls separating the evaporation compartment 18 from the end chambers 16, 20. The at least one evaporation compartment is provided with a plurality of longitudinal pipes 21 running from one sidewall to the other sidewall, and that the sidewalls are provided with openings for said plurality of pipes 21 thereby establishing connection between the first end chamber 16 and the second end chamber 20. The plurality of pipes 21 is shown in figures 2 and 3.

According to embodiments, the MVR-unit comprises a compressor tube 24 running along the longitudinal axis A of the enclosure 10 through the center of the at least one evaporation compartment 18, and configured to allow steam to flow from the second end chamber 20 to the first end chamber 16 of the enclosure. More particularly, in one specific variation, steam output in the second end chamber 20 from the plurality of pipes 21, will enter an outer circumferential part of the compressor tube and then be combined via openings to the steam flow in an inner central tube. The steam flow in the inner central tube is provided from the evaporation compartment 18 via connections, e.g. one or many pipes, indicated by block arrows in figure 2.

The MVR-unit further comprises the compressor assembly 26 comprising a turbine provided with turbine vane members structured to provide steam flow in an axial direction, i.e. along the longitudinal axis, within the compressor tube 24 from the second end to the first end of the enclosure 10. In figure 2, the steam flow within the compressor tube is indicated by a block arrow. The turbine assembly 26 comprises a motor 31 for rotating the turbine at a variable rotational speed. In figure 2, the motor 31 is arranged in relation to the second end of the enclosure 10, and in figure 3, the motor is not shown.

A working liquid is supplied into the evaporation compartment of the MVR unit, wherein when the working liquid is subjected to evaporation in the evaporation compartment, water (the refrigerant) is separated from the remaining working liquid (the absorbent) as steam.

The working liquid is supplied into the evaporation compartment, e.g. sprayed via nozzles. The steam is provided to the compressor tube where a turbine is configured to generate a steam flow through the compressor tube from the second end to the first end of the enclosure. The MVR unit comprises a fluid-tight enclosure capable to withstand both high and low pressures. As discussed above, the evaporation compartment is provided with a plurality of evaporation pipes 21 running essentially along axis A of the MVR-unit. The evaporation pipes may be symmetrically arranged around the compressor tube and preferably evenly spread on a cross-sectional plane perpendicular to the horizontal axis. The evaporation pipes are arranged to receive and transfer steam from the first end chamber to the second end chamber. In the MVR-unit, the working liquid is separated from the water by evaporation inside the evaporation compartment, which is provided with the plurality of pipes. The steam is compressed when flowing through the central tube by being accelerated by the turbine member.

Thus, a working liquid salt brine solution, preferably a lithium bromide salt brine solution and an anti-freezing agent, is left at the bottom of the evaporation compartment, and the salt brine solution is supplied via a salt brine solution line 34 to the absorption cooler unit, and wherein the salt brine solution may be supplied by the pressure in the evaporation compartment, preferably, no pump is required.

The hot water condensate from the MVR-unit, more particularly, in the embodiments shown in figure 2, from the second end chamber, or, in the embodiments shown in figure 3, from the evaporation chamber, is supplied to the absorption cooler unit via the working liquid condensate line 32. Since it is already under pressure, it does not need to be pumped.

With references to the embodiments shown in figure 2, a first variation of the thermal energy arrangement will now be discussed in detail.

According to this first variation, the absorption cooler unit 6 comprises two compartments separated by a partial inner wall 46, a first compartment 48 into which the salt brine solution is supplied, and a second compartment 50 into which the working liquid condensate is supplied.

A cooling line 41 is provided and immersed in the working liquid condensate within the second compartment 50, the outlet of the cooling line 41 is connected to a cooling system of an external thermal energy user 42, the heat carried by the liquid supplied to the cooling line 41 will then heat the water within the second compartment 50 of the absorption cooler unit 6, which then evaporates even faster.

The working liquid mixture is lead to the bottom of the MVR evaporation compartment 18 via working liquid line 22. A partial vacuum, supplied by the vacuum unit 28, lowers the pressure below ambient pressure in this compartment, which allows the working liquid mixture to boil and evaporate at a temperature significantly below 100 C. A heating member 38 heats the working liquid up to evaporation temperature and the compressor assembly 26 is started, compressing the evaporating water vapour to higher pressure and temperature, typically 5-40 °C above evaporation temperature. The compressed water vapour leads the evaporation heat back to the concentrated working liquid mixture that absorbs it via a heat exchanger-arrangement within the evaporator compartment, e.g. tubular, calandria, etc. through physical wetting of one side of the tubes, typically embodied by the plurality of pipes 21.

The highly pressurized water vapour, on the other side of the heat exchanger-arrangement, condenses and the working liquid condensate in the second end chamber 20 is led by the working liquid condensate line 32 through the heat exchanger 36, to release further heat, before passing through an optional thermal expansion valve, TXV. The sudden pressure drop significantly cools the liquid refrigerant, that is now passed on to the absorption cooler unit 6; a unit where the system pressure is explicitly dictated by the external cooling circuit intake liquid temperature (supporting refrigerant evaporation at or below mentioned temperature). The refrigerant is either evaporating on the surface of a heat exchanger arrangement, while absorbing the heat of the cooling circuit liquid (that now gets cold) of the cooling line 41, or is being used as primary cooling liquid in the cooling circuit. After absorbing thermal load (e.g. cooling equipment or space), the refrigerant returns into water vapour again.

In parallel, the concentrated absorbent salt brine solution is transferred by the salt brine solution line 34 from the evaporation compartment 18 of the MVR unit through the heat exchanger 36, to release heat, e.g. via pump or gravity feed, into the absorption cooler unit 6. The highly hydrophilic absorbent is introduced into the first compartment 48, i.e. into an absorption chamber, and through the utilization of flowline manipulation (e.g. contracting wall geometry and venturi) introduced as concentrated as possible to the water vapour, where the latter gets absorbed chemically by the absorbent in an exothermic process that also contributes to maintaining the chamber vacuum. The resulting weak working liquid solution is collecting heat during its passage via the working liquid line 22 through the heat exchanger 36 and is thereafter lead back to the MVR unit for another cycle.

A thermal expansion valve (TXV) is a component used in refrigeration and air conditioning systems to regulate the flow of refrigerant into an evaporator coil. It plays a crucial role in maintaining optimal efficiency and performance of cooling systems. The TXV adjusts the amount of refrigerant that flows into the evaporator based on the temperature and pressure of the refrigerant. A sensing bulb filled with a refrigerant similar to the system's refrigerant detects the temperature of the evaporator outlet and adjusts the valve opening accordingly.

With references to the embodiments shown in figure 3, a second variation of the thermal energy arrangement will now be discussed in detail.

According to this embodiment, the absorption cooler unit 6 is a flash chamber type absorption cooler unit.

The absorption cooler unit 6 is configured to receive the working liquid condensate via the working liquid condensate line 32, and the working liquid salt brine solution via the salt brine solution line 34.

Preferably, the working liquid condensate line 32 is provided with a thermal expansion valve TXV thereby reducing pressure and losing heat due to negative pressure volume work done.

The flash chamber type absorption cooler unit is also configured to supply working liquid to the MVR unit 4 via the working liquid line 22.

According to an embodiment, the flash chamber type absorption cooler unit 6 is provided with a flash chamber outflow cooling line 52, 41 configured to lead the working liquid condensate to an external thermal energy user 42 for cooling purposes, and a flash chamber inflow cooling line 54, 41 configured to receive the working liquid condensate from the external thermal energy user 42 and supply it into an upper part of the flash chamber type absorption cooler unit.

A flash chamber is a device used in industrial and scientific processes to separate components in a mixture, typically by taking advantage of pressure and temperature changes that cause one component to vaporize (or "flash") while others remain liquid. Flash chambers are common in refrigeration, chemical processing, and energy generation systems.

The principle of operation for a so-called flash chamber is that a liquid mixture enters the chamber, where it experiences a sudden drop in pressure or a controlled change in temperature, which causes the more volatile component(s) to vaporize ("flash"), separating from the liquid phase. A typical flash chamber is a sealed tank or vessel with an inlet for the mixture, an outlet for the vapor, and another outlet for the liquid. Internal components may include baffles, demisters, or trays to optimize separation and prevent carryover. Flash chambers are used in refrigeration and air conditioning to help separate refrigerant phases in cooling systems, improving efficiency.

Embodiments of the second variation of the thermal energy arrangement illustrated in figure 3, will now be further described.

In order to maximize water separation of the working liquid, i.e. the "weak" LiBr-solution, in the MVR-unit, a vertically arranged MVR unit is provided. The outer surfaces of the numerous pipes 21 are heated by compressed steam emanating from the vertically arranged axial compressor assembly 26, e.g. with low-pressure bypass of recycled steam.

The calandria is fed from above with the "weak" LiBr-solution via the working liquid line 22 and gets more and more concentrated as it follows the surfaces, driven by gravity, on the inside of the pipes, preferably coated with a non-stick coating.

A motorized control valve 23, guided by e.g. a laser diffraction sensor arrangement, may be provided, to divert a small flow of high-pressure vapour, into the bottom part of the calandria if needed, thereby increasing pressure just enough to ascertain the upwards rising of the evaporated water-vapour back up through the pipes in the counterflow direction, to the top section of the calandria. This brings at least two advantages with it: 1) the salt brine solution, e.g. the "strong" LiBr-solution, gets less exposed to water vapour before leaving for the flash chamber absorption cooler unit 6, via the salt brine solution line 34, and thus remains as concentrated as possible for the highest COP obtainable, and 2) the evaporated water vapour gets more accessible to the turbine of the compressor assembly, and will thereby become more easily digested and compressed by it.

Both the hot condensate and the hot "strong" LiBr-solution, in the bottom of the calandria, pass through the heat exchanger 36, to relieve heat, and are thereafter distributed to the flash chamber type absorption cooler unit 6, driven by gravity and differential pressure.

The working liquid, in the working liquid condensate line 32, i.e. the cooler condensate "coolant", enters the absorption cooler unit 6 (being held at nearly vacuum by a vacuum pump and the water absorption process of LiBr), e.g. via a thermal expansion valve TXV, thereby reducing pressure and losing heat due to negative pressure volume work done. The coolant remains in liquid state (due to its low temperature) and is pumped out as "cooling working liquid" to auxiliary heat load by a pump.

As the heated coolant returns via cooling line 41, 54, it enters the entrance duct of a venturi, preferably through a pressure relief valve, and evaporates immediately due to its newly gained thermal (heat) energy. This sudden evaporation and volume expansion (liquid water to steam) will generate a downward-oriented flow with a tangible velocity, through the venturi, that, following Bernoulli's equation, will induce a local low-pressure in its "throat", where the "strong" LiBr-solution, via the salt brine solution line 34 gets introduced via a spray-nozzle. A perfect mixing is already assured, but furthermore facilitated by the introduction of a static mixer directly in the flow path downstream of the mixture. Remaining mists and vapour, of both sorts, are absolutely free to circulate through the open inlet (top) of the venturi, again and again, driven by the coolants downward flow, until maximum amount of water vapour has been chemically absorbed by the carrier, and it has fallen to the bottom of the vessel due to the significant difference in density.

This process is moderately exothermal, thus releases some heat to the surrounding, although assists greatly to the upholding of vacuum by its "greedy" molecular attachment, i.e. hydrophilic propensity to water molecules, resulting in a net volume decrease through absorption with corresponding pressure decrease.

A pump, controlled by a level gauge in the bottom of the flash chamber, which is schematically indicated by a dashed arrow, pumps the diluted working liquid, e.g. the "weak" LiBr-solution, in the working liquid line 22 back through the heat exchanger 36 (counterflow - this time for heating purposes) and into the top of the MVR, right at the start of the calandria, for another cycle through the system.

In a further embodiment, which is applicable to all embodiments discussed herein, the MVR-unit 4 and the absorption cooler unit 6 are arranged within a common enclosure making up the thermal energy arrangement 2, and wherein the common enclosure comprises a hermetically sealed enclosure.

Advantageously, and applicable to all embodiments, the control system 8 is configured to receive a temperature signal comprising at least one user requested temperature, and to control the thermal energy arrangement 2 in dependence of the at least one requested temperature, to supply the generated thermal energy to the external thermal energy user via the cooling line 41 and/or the heating line 40 to keep the temperature(s) of the external thermal energy user at requested temperature(s).

The present invention is not limited to the above-described preferred embodiments. Various alternatives, and modifications may be used. Therefore, the above embodiments should not be taken as limiting the scope of the invention, which is defined by the appending claims.

## Claims

1. A thermal energy arrangement (2) comprising a mechanical vapor recompression, MVR, unit (4), an absorption cooler unit (6), and a control system (8) configured to control said MVR unit (4) and said absorption cooler unit (6),
the MVR-unit (4) comprises a pressure-tight enclosure (10) provided with a first end and a second end, and having an elongated shape along a longitudinal axis A, and comprises a first end chamber (16), at least one evaporation compartment (18), and a second end chamber (20), arranged within said enclosure (10) along the longitudinal axis A, the at least one evaporation compartment (18) of the MVR-unit (4) is arranged to receive a working liquid, comprising a mixture of at least an absorbent, and a refrigerant, from the absorption cooler unit (6) via a working liquid line (22), the MVR-unit (4) further comprises a compressor tube (24) running along the longitudinal axis A of the enclosure (10), and a compressor assembly (26) structured to provide a working liquid vapour flow within said tube (24) from the second end to the first end of the enclosure (10),
**characterized in that** said at least one evaporation compartment (18) is connected to a controllable vacuum unit (28) via a vacuum line (30), wherein said control system (8) is configured to control said vacuum unit (28) to generate a variable pressure, being below ambient pressure, in dependence of a set of pressure control rules, in order to lower the evaporation temperature of the working liquid within the at least one evaporation compartment (18), wherein the set of pressure control rules is related to characteristics of the working liquid,
wherein working liquid condensate from the MVR-unit (4) is arranged to be supplied to the absorption cooler unit (6) via a working liquid condensate line (32), wherein, as the refrigerant evaporates in said evaporation compartment (18), a working liquid salt brine solution in said at least one evaporation compartment (18) is arranged to be supplied via a salt brine solution line (34) to said absorption cooler unit (6),
and that the thermal energy arrangement (2) further comprises a heat exchanger (36) arranged at said working liquid condensate line (32) and said salt brine solution line (34) configured to transfer heat from the working liquid condensate and the salt brine solution to the working liquid in the working liquid line (22) to be supplied to said MVR-unit (4).

2. The thermal energy arrangement (2) according to claim 1, wherein said characteristics of the working liquid comprises the evaporation temperature of the working liquid.

3. The thermal energy arrangement (2) according to claim 1 or 2, wherein said working liquid comprises a mixture of an absorbent being Lithium Bromide, a refrigerant being water, a corrosion inhibitor being e.g. Lithium Chromate, and an antifreeze agent being e.g. Ethylene Glycol.

4. The thermal energy arrangement (2) according to any of claims 1-3, comprising a heating member (38) configured to heat the working liquid within the evaporator compartment (18) to an evaporation temperature of said working liquid, and when the temperature of the working liquid has reached said evaporation temperature, the control system (8) is configured to control said compressor assembly (26) to start, resulting in that said evaporated working liquid vapour is compressed and the temperature is increased to a higher temperature, typically 5-40 °C above the evaporation temperature.

5. The thermal energy arrangement (2) according to any of claims 1-4, wherein said heat exchanger (36) comprises a heating line (40) with a heating liquid arranged to be heated and then applied to an external thermal energy user (42) for heating purposes.

6. The thermal energy arrangement (2) according to any of claims 1-5, wherein said the absorption cooler unit (6) is connected to said vacuum unit (28) via an absorption cooler vacuum line (44), and wherein said control system (8) is configured to control said vacuum unit (28) to generate a variable pressure in dependence of a set of pressure absorption cooler unit control rules.

7. The thermal energy arrangement (2) according to any of claims 1-6, wherein the absorption cooler unit (6) comprises two compartments separated by a partial inner wall (46), a first compartment (48) into which the salt brine solution is supplied, and a second compartment (50) into which the working liquid condensate is supplied.

8. The thermal energy arrangement (2) according to claim 7, wherein a cooling line (41) is provided and immersed in the working liquid condensate within the second compartment (50), the outlet of the cooling line (52) is connected to a cooling system of an external thermal energy user (42), the heat carried by the liquid supplied to the cooling line (41) will then, when returning, heat the water within the second compartment (50) of the absorption cooler unit (6), which then evaporates even faster.

9. The thermal energy arrangement (2) according to any of claims 1-6, wherein the absorption cooler unit (6) is a flash chamber type absorption cooler unit, which is configured to receive the working liquid condensate via said working liquid condensate line (32), and the working liquid salt brine solution via said salt brine solution line (34), the flash chamber type absorption cooler unit is also configured to supply working liquid to the MVR unit (4) via said working liquid line (22).

10. The thermal energy arrangement (2) according to claim 9, wherein the flash chamber type absorption cooler unit is provided with a flash chamber outflow cooling line (52) configured to lead said working liquid condensate to an external thermal energy user (42) for cooling purposes and a flash chamber inflow cooling line (54) configured to receive the working liquid condensate from the external thermal energy user (42) and supply it into an upper part of the flash chamber type absorption cooler unit.

11. The thermal energy arrangement (2) according to any of claims 1-10, wherein said MVR-unit (4) and said absorption cooler unit (6) are arranged within a common enclosure making up said thermal energy arrangement (2), and wherein said common enclosure comprises a hermetically sealed cylindrical enclosure.
